(19) Europäisches Patentamt
European Patent Office
Office européen des brevets

(11) EP 0 906 017 B1

(12) **EUROPÄISCHE PATENTSCHRIFT**

(45) Veröffentlichungstag und Bekanntmachung des Hinweises auf die Patenterteilung:
**02.01.2002 Patentblatt 2002/01**

(21) Anmeldenummer: **97921689.2**

(22) Anmeldetag: **22.04.1997**

(51) Int Cl.[7]: **A01N 47/24**, A01N 37/52
// (A01N37/52, 43:54),
(A01N47/24, 43:54)

(86) Internationale Anmeldenummer:
**PCT/EP97/02023**

(87) Internationale Veröffentlichungsnummer:
**WO 97/40685 (06.11.1997 Gazette 1997/47)**

(54) **FUNGIZIDE MISCHUNGEN**

FUNGICIDE MIXTURES

MELANGES FONGICIDES

(84) Benannte Vertragsstaaten:
**AT BE CH DE DK ES FR GB GR IE IT LI NL PT SE**
Benannte Erstreckungsstaaten:
**SI**

(30) Priorität: **26.04.1996 DE 19616720**
**29.04.1996 DE 19617070**
**02.09.1996 DE 19635506**

(43) Veröffentlichungstag der Anmeldung:
**07.04.1999 Patentblatt 1999/14**

(73) Patentinhaber: **BASF AKTIENGESELLSCHAFT**
**67056 Ludwigshafen (DE)**

(72) Erfinder:
- **MÜLLER, Ruth**
  **D-67159 Friedelsheim (DE)**
- **BAYER, Herbert**
  **D-68159 Mannheim (DE)**
- **SAUTER, Hubert**
  **D-68167 Mannheim (DE)**
- **AMMERMANN, Eberhard**
  **D-64646 Heppenheim (DE)**
- **LORENZ, Gisela**
  **D-67434 Hambach (DE)**
- **STRATHMANN, Siegfried**
  **D-67117 Limburgerhof (DE)**
- **SCHELBERGER, Klaus**
  **D-67161 Gönnheim (DE)**
- **SCHERER, Maria**
  **D-76829 Landau (DE)**
- **LEYENDECKER, Joachim**
  **D-67454 Hassloch (DE)**
- **MÜLLER, Bernd**
  **D-67227 Frankenthal (DE)**

(56) Entgegenhaltungen:
**EP-A- 0 642 735**
**WO-A-95/15083**
**WO-A-95/21153**
**WO-A-96/01256**
**WO-A-96/01258**
**WO-A-97/06677**
**DE-A- 19 528 651**
**GB-A- 2 267 644**
**GB-A- 2 279 568**

- **PESTICIDE SCIENCE, Bd. 44, Nr. 1, Mai 1995, Seiten 77-79, XP002020496 FRAINE DE P J ET AL: "A NEW SERIES OF BROAD-SPECTRUM BETA-METHOXYACRYLATE FUNGICIDES WITH AN OXIME ETHER SIDE-CHAIN"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 906 017 B1

## Beschreibung

Die vorliegende Erfindung betrifft eine fungizide Mischung, welche

a) einen Oximether der Formel I,

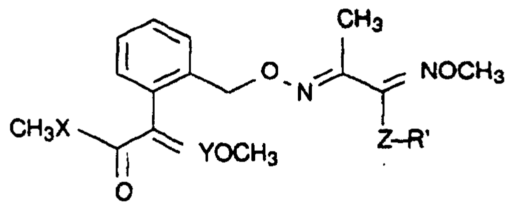

(I)

in der die Substituenten die folgende Bedeutung haben:

- X Sauerstoff oder Amino (NH);
- Y CH oder N;
- Z Sauerstoff, Schwefel, Amino (NH) oder $C_1$-$C_4$-Alkylamino (N-$C_1$-$C_4$-Alkyl);
- R' $C_1$-$C_6$-Alkyl, $C_1$-$C_6$-Halogenalkyl, $C_3$-$C_6$-Alkenyl, $C_2$-$C_6$-Halogenalkenyl, $C_3$-$C_6$-Alkinyl, $C_3$-$C_6$-Halogenalkinyl, $C_3$-$C_6$-Cycloalkyl-methyl, oder Benzyl, welches partiell oder vollständig halogeniert sein kann und/oder einen bis drei der folgenden Reste tragen kann: Cyano, $C_1$-$C_4$-Alkyl, $C_1$-$C_4$-Halogenalkyl, $C_1$-$C_4$-Alkoxy, $C_1$-$C_4$-Halogenalkoxy und $C_1$-$C_4$-Alkylthio und/oder

b) ein Carbamat der Formel III,

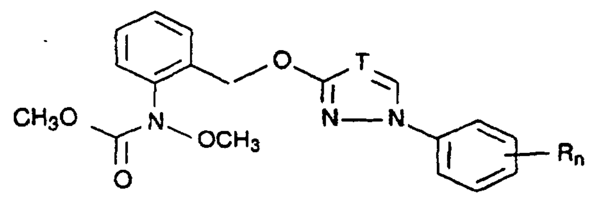

(II)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht,
und
c) ein Pyrimidinderivat der Formel III,

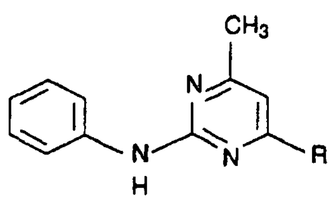

(III)

in der R für Methyl, Propin-1-yl oder Cyclopropyl steht,
in einer synergistisch wirksamen Menge enthält.

Außerdem betrifft die Erfindung Verfahren zur Bekämpfung von Schadpilzen mit den Verbindungen I und/oder II und III oder sie enthaltenden synergistischen Mischungen und die Verwendung der Verbindungen I und/oder II bzw. der Verbindungen III zur Herstellung derartiger Mischungen.

Die Verbindungen der Formel I, ihre Herstellung und ihre Wirkung gegen Schadpilze ist aus der Literatur bekannt (WO-A 95/21,153, WO-A 95/21,154, DE-A 195 28 651.0).

Verbindungen der Formel II, deren Herstellung und deren Wirkung gegen Schadpilze sind in den WO-A

96/01,256 und WO-A 96/01,258 beschrieben.

Ebenfalls bekannt sind die Pyrimidinderivate III, deren Herstellung und deren Wirkung gegen Schadpilze [R = Methyl: DD-A 151 404 (common name: Pyrimethanil); R = 1-Propinyl: EP-A 224 339 (common name: Mepanipyrim); R=Cyclopropyl: EP-A 310 550].

Im Hinblick auf eine Senkung der Aufwandmengen und eine Verbesserung des Wirkungsspektrums der bekannten Verbindungen lagen der vorliegenden Erfindungen Mischungen zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und/oder II und der Verbindungen III oder bei Anwendung der Verbindungen I und/oder II und der Verbindungen III nacheinander Schadpilze besser bekämpfen lassen als nur mit den Verbindungen I und/oder II oder III.

Die allgemeine Formel I steht insbesondere repräsentativ für Oximether, in denen X Sauerstoff und Y CH bedeutet oder X Amino und Y N bedeutet.

Außerdem werden Verbindungen I bevorzugt, in denen Z für Sauerstoff steht.

Gleichermaßen werden Verbindungen I bevorzugt, in denen R' für Alkyl oder Benzyl steht.

Im Hinblick auf ihre Verwendung in den erfindungsgemäßen synergistischen Mischungen werden insbesondere die in den folgenden Tabellen zusammengestellten Verbindungen I bevorzugt:

Tabelle 1.

Verbindungen der Formel IA, in denen ZR' für eine Verbindung jeweils einer Zeile der Tabelle A entspricht

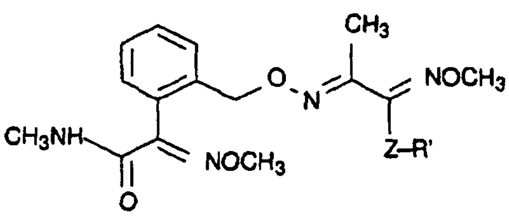

(IA)

Tabelle 2.

Verbindungen der Formel IB, in denen ZR' für eine Verbindung jeweils einer Zeile der Tabelle A entspricht

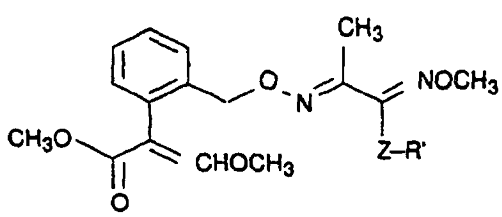

(IB)

Tabelle A:

| Nr. | ZR' |
|---|---|
| I.1 | $O-CH_2CH_2CH_3$ |
| I.2 | $O-CH(CH_3)_2$ |
| I.3 | $O-CH_2CH_2CH_2CH_3$ |
| I.4 | $O-CH(CH_3)CH_2CH_3$ |
| I.5 | $O-CH_2CH(CH_3)_2$ |
| I.6 | $O-C(CH_3)_3$ |
| I.7 | $S-C(CH_3)_3$ |

Tabelle A: (fortgesetzt)

| Nr. | ZR' |
|---|---|
| I.8 | O-CH $(CH_3)$ $CH_2CH_2CH_3$ |
| I.9 | $O-CH_2C(CH_3)_3$ |
| I.10 | $O-CH_2C(Cl)=CCl_2$ |
| I.11 | $O-CH_2CH=CH-Cl$ (trans) |
| I.12 | $O-CH_2C(CH_3)=CH_2$ |
| I.13 | $O-CH_2$-(cyclopropyl) |
| I.14 | $O-CH_2-C_6H_5$ |
| I.15 | $O-CH_2-[4-F-C_6H_4]$ |
| I.16 | $O-CH_2CH_3$ |
| I.17 | $O-CH(CH_2CH_3)_2$ |

Die Verbindungen der Formel I können in Bezug auf die C=Y-Doppelbindung in der E- oder der Z-Konfiguration (in Bezug auf die Carbonsauregruppierung) vorliegen. Demgemäß können sie in der erfindungsgemäßen Mischung entweder als reine Isomere oder als E/Z-Isomerenmischung Verwendung finden. Bevorzugt findet die E/Z-Isomerenmischung oder das E-Isomere Anwendung, wobei in vielen Fällen das E-Isomere besonders bevorzugt ist.

Die C=N-Doppelbindungen der Oximethergruppierungen in der Seitenkette der Verbindungen I können jeweils als reine E- oder Z-Isomere oder als E/Z-Isomerengemische vorliegen. Die Verbindungen I können sowohl als Isomerengemische als auch als reine Isomere in den erfindungsgemäßen Mischungen verwendet werden. Im Hinblick auf ihre Verwendung werden insbesondere Verbindungen I bevorzugt, in denen die endständige Oximethergruppierung der Seitenkette in der cis-Konfiguration vorliegt ($OCH_3$-Gruppe zu ZR').

Die Formel II repräsentiert insbesondere Carbamate, in denen die Kombination der Substituenten einer Zeile der folgenden Tabelle entspricht:

Tabelle 3

| Nr. | T | $R_n$ |
|---|---|---|
| II.1 | N | 2-F |
| II.2 | N | 3-F |
| II.3 | N | 4-F |
| II.4 | N | 2-Cl |
| II.5 | N | 3-Cl |
| II.6 | N | 4-Cl |
| II.7 | N | 2-Br |
| II.8 | N | 3-Br |
| II.9 | N | 4-Br |
| II.10 | N | $2-CH_3$ |
| II.11 | N | $3-CH_3$ |
| II.12 | N | $4-CH_3$ |
| II.13 | N | $2-CH_2CH_3$ |
| II.14 | N | $3-CH_2CH_3$ |
| II.15 | N | $4-CH_2CH_3$ |
| II.16 | N | $2-CH(CH_3)_2$ |
| II.17 | N | $3-CH(CH_3)_2$ |

Tabelle 3 (fortgesetzt)

| Nr. | T | $R_n$ |
|---|---|---|
| II.18 | N | $4-CH(CH_3)_2$ |
| II.19 | N | $2-CF_3$ |
| II.20 | N | $3-CF_3$ |
| II.21 | N | $4-CF_3$ |
| II.22 | N | $2,4-F_2$ |
| II.23 | N | $2,4-Cl_2$ |
| II.24 | N | $3,4-Cl_2$ |
| II.25 | N | $2-Cl, 4-CH_3$ |
| II.26 | N | $3-Cl, 4-CH_3$ |
| II.27 | CH | 2-F |
| II.28 | CH | 3-F |
| II.29 | CH | 4-F |
| II.30 | CH | 2-Cl |
| II.31 | CH | 3-Cl |
| II.32 | CH | 4-Cl |
| II.33 | CH | 2-Br |
| II.34 | CH | 3-Br |
| II.35 | CH | 4-Br |
| II.36 | CH | $2-CH_3$ |
| II.37 | CH | $3-CH_3$ |
| II.38 | CH | $4-CH_3$ |
| II.39 | CH | $2-CH_2CH_3$ |
| II.40 | CH | $3-CH_2CH_3$ |
| II.41 | CH | $4-CH_2CH_3$ |
| II.42 | CH | $2-CH(CH_3)_2$ |
| II.43 | CH | $3-CH(CH_3)_2$ |
| II.44 | CH | $4-CH(CH_3)_2$ |
| II.45 | CH | $2-CF_3$ |
| II.46 | CH | $3-CF_3$ |
| II.47 | CH | $4-CF_3$ |
| II.48 | CH | $2,4-F_2$ |
| II.49 | CH | $2,4-Cl_2$ |
| II.50 | CH | $3,4-Cl_2$ |
| II.51 | CH | $2-Cl, 4-CH_3$ |
| II.52 | CH | $3-Cl, 4-CH_3$ |

Besonders bevorzugt werden die Verbindungen II.12, II.23, II.32 und II.38.

Die Verbindungen der Formel I bis III sind wegen des basischen Charakters in der Lage, mit anorganischen oder organischen Säuren oder mit Metallionen Salze zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calcium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden wertigkeiten vorliegen.

Bevorzugt setzt man bei der Bereitstellung der Mischungen die reinen Wirkstoffe ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und/oder II und III bzw. die gleichzeitige gemeinsame oder getrennte Verwendung der Verbindungen I und/oder II und III zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen. Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Rhynchosporium secalis in Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und/oder II und III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und/oder II und III werden üblicherweise in einem Gewichtsverhältnis von 20:1 bis 0.1:2, vorzugsweise 10:1 bis 0.1:1, insbesondere 5:1 bis 0.2:1 angewendet.

Die Aufwandmengen der erf indungsgemäßen Mischungen liegen je nach Art des gewünschten Effekts bei 0,01 bis 3 kg/ha, vorzugsweise 0,1 bis 1,5 kg/ha, insbesondere 0,4 bis 1,0 kg/ha.

Die Aufwandmengen liegen dabei im allgemeinen für die Verbindungen I und/oder II bei 0,01 bis 0,5 kg/ha, vorzugsweise 0,05 bis 0,5 kg/ha, insbesondere 0,05 bis 0,2 kg/ha.

Die Aufwandmengen für die Verbindungen III liegen entsprechend üblicherweise bei 0,1 bis 1,0 kg/ha, vorzugsweise 0,4 bis 1,0 kg/ha, insbesondere 0,4 bis 0,8 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 8 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und/oder II und III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und/oder II und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder

Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und/oder II und III oder der Mischung aus den Verbindungen I und/oder II und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und/oder II oder III bzw. der Mischung aus den Verbindungen I und/oder II und III. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und/oder II oder III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und/oder II und III bei getrennter Ausbringung, behandelt. Die Anwendung kann vor oder nach dem Befall durch die Schadpilze erfolgen.

Die fungizide Wirkung der Verbindungen und der Mischungen ließ sich durch folgende Versuche zeigen:

Die Wirkstoffe werden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen. Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Der Wirkungsgrad (W) wird nach der Formel von Abbot wie folgt berechnet:

$$W = (1 - \alpha) \cdot 100/\beta$$

α entspricht dem Pilzbefall der behandelten Pflanzen in % und

β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Beispiele 1-17 - Protektive Wirksamkeit gegen Puccinia recondita an Weizen (Weizenbraunrost)

Die Blätter von in Töpfen gewachsenen Weizensämlingen der Sorte "Frühgold" wurden mit einer wäßrigen Spritzbrühe, die mit einer Stammlösung aus 10 % Wirkstoff, 63 % Cyclohexanon und 27 % Emulgiermittel angesetzt worden war, tropfnaß besprüht. Am folgenden Tage wurden die Blätter angefeuchtet und mit Sporen des Braunrostes (Puccinia recondita) bestäubt. Anschließend wurden die Töpfe für 24 Stunden in einer Kammer mit hoher Luftfeuchtigkeit (90 bis 95 %) und Temperaturen zwischen 20 und 22°C gestellt. Während dieser Zeit keimten die Sporen aus und die Keimschläuche drangen in das Blattgewebe ein. Die behandelten und infizierten Pflanzen wurden dann im Gewächshaus für weitere 7 Tage bei Temperaturen zwischen 20 und 22°C und 65 bis 70 % relativer Luftfeuchte kultiviert. Dann wurde das Ausmaß der Rostpilzentwicklung auf den Blättern visuell ermittelt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Tabelle 4

| | Wirkstoff oder Kombination | Wirkstoffkonzentration in der Spritzbrühe in ppm | Wirkungsgrad in % der unbehandelten Kontrolle |
|---|---|---|---|
| 1V | Kontrolle (unbehandelt) | (100 % Befall) | 0 |
| 2V | Tab. 1 A Nr. 2 = A | 12,5<br>5<br>2,5 | 40<br>10<br>0 |
| 3V | Tab. 1 A Nr. 4 = B | 5<br>2,5 | 80<br>20 |
| 4V | III a<br>R = Methyl<br>Pyrimethanil | 125<br>50<br>25 | 50<br>20<br>0 |
| 5V | III b<br>R = 1-Propinyl<br>Mepanipyrim | 125<br>50<br>25 | 0<br>0<br>0 |
| 6V | III c<br>R = Cyclopropyl<br>Cyprodinil | 50 | 85 |

Tabelle 5

| Bsp. | Wirkstoffkonzentration in der Spritzbrühe in ppm | beobachteter Wirkungsgrad | berechneter Wirkungsgrad*) |
|---|---|---|---|
| 7 | 12,5 A<br>+<br>12,5 IIIa | 90 | 70 |
| 8 | 5 A<br>+<br>50 IIIa | 80 | 28 |

*) berechnet nach der Colby-Formel

Tabelle 5 (fortgesetzt)

| Bsp. | Wirkstoffkonzentration in der Spritzbrühe in ppm | beobachteter Wirkungsgrad | berechneter Wirkungsgrad*) |
|---|---|---|---|
| 9 | 2,5 A + 25 IIIa | 20 | 0 |
| 10 | 12,5 A + 125 IIIb | 97 | 40 |
| 11 | 5 A + 50 IIIb | 90 | 10 |
| 12 | 2,5 A + 25 IIIb | 30 | 0 |
| 13 | 5 A + 50 IIIc | 95 | 87 |
| 14 | 5 B + 50 IIIa | 80 | 68 |
| 15 | 5 B + 50 IIIb | 90 | 60 |
| 16 | 2,5 B + 50 IIIb | 80 | 20 |
| 17 | 5 B + 50 IIIc | 100 | 94 |

*) berechnet nach der Colby-Formel

Aus den Ergebnissen der Versuche geht hervor, daß der beobachtete Wirkungsgrad in allen Mischungsverhältnissen höher ist, als der nach der Colby-Formel vorausberechnete Wirkungsgrad.

Beispiele 18-34 - Protektive Wirksamkeit gegen Puccinia recondita an Weizen (Weizenbraunrost)

Die Blätter von in Töpfen gewachsenen Weizensämlingen der Sorte "Frühgold" wurden mit einer wäßrigen Spritzbrühe, die mit einer Stammlösung aus 10 % Wirkstoff, 63 % Cyclohexanon und 27 % Emulgiermittel angesetzt worden war, tropfnaß besprüht. Am folgenden Tage wurden die Blätter angefeuchtet und mit Sporen des Braunrostes (Puccinia recondita) bestäubt. Anschließend wurden die Töpfe für 24 Stunden in eine Kammer mit hoher Luftfeuchtigkeit (90 bis 95 %) und Temperaturen zwischen 20 und 22°C gestellt. Während dieser Zeit keimten die Sporen aus und die Keimschläuche drangen in das Blattgewebe ein. Die behandelten und infizierten Pflanzen wurden dann im Gewächshaus für weitere 7 Tage bei Temperaturen zwischen 20 und 22°C und 65 bis 70 % relativer Luftfeuchte kultiviert. Dann wurde das Ausmaß der Rostpilzentwicklung auf den Blättern visuell ermittelt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 -22, 1967) ermittelt und mit den beobachteten Wirkungsgraden verglichen.

Tabelle 6

| Bsp. | Wirkstoff oder Kombinationen | Wirkstoffkonzentration in der Spritzbrühe in ppm | Wirkungsgrad in % der unbehandelten Kontrolle |
|---|---|---|---|
| 18V | Kontrolle (unbehandelt) | (100 % Befall) | 0 |
| 19V | Verbindung Nr. II.32 aus Tabelle 3 = C | 12,5<br>5<br>2,5<br>1,25 | 85<br>80<br>60<br>10 |
| 20V | Verbindung Nr. II.38 aus Tabelle 3 = D | 12,5<br>5<br>2,5 | 90<br>80<br>20 |
| 21V | IIIa<br>R = Methyl<br>Pyrimethanil | 125<br>50<br>25 | 50<br>20<br>0 |
| 22V | III b<br>R = 1-Propinyl<br>Mepanipyrim | 125<br>50<br>25<br>12,5 | 0<br>0<br>0<br>0 |
| 23V | IIIc<br>R = Cyclopropyl<br>Cyprodinil | 12,5 | 0 |

Tabelle 7

| Bsp. | Wirkstoffkonzentration in der Spritzbrühe in ppm | beobachteter Wirkungsgrad | berechneter Wirkungsgrad*) |
|---|---|---|---|
| 24 | 12,5 C<br>+<br>125 IIIa | 97 | 93 |
| 25 | 5 C<br>+<br>50 IIIa | 95 | 84 |
| 26 | 2,5 C<br>+<br>25 IIIa | 95 | 60 |
| 27 | 5 C<br>+<br>IIIb 50 IIIb | 90 | 80 |
| 28 | 2,5 C<br>+<br>25 IIIb | 85 | 60 |
| 29 | 1,25 C<br>+<br>12,5 IIIb | 40 | 10 |

*) berechnet nach der Colby-Formel

Tabelle 7 (fortgesetzt)

| Bsp. | Wirkstoffkonzentration in der Spritzbrühe in ppm | beobachteter Wirkungsgrad | berechneter Wirkungsgrad*) |
|---|---|---|---|
| 30 | 12,5<br>+<br>125 IIIa | 100 | 95 |
| 31 | 12,5 D<br>+<br>125 IIIb | 100 | 90 |
| 32 | 5 D<br>+<br>50 IIIb | 97 | 80 |
| 33 | 2,5 D<br>+<br>25 IIIb | 80 | 20 |
| 34 | 2,5 D<br>+<br>12,5 IIIb | 93 | 20 |
| 35 | 2,5 D<br>+<br>12,5 IIIc | 70 | 20 |

*) berechnet nach der Colby-Formel

Aus den Ergebnissen der Beispiele 1-34 geht hervor, daß der beobachtete Wirkungsgrad in allen Mischungsverhältnissen höher ist als der nach der Colby-Formel vorausberechnete Wert.

## Patentansprüche

1. Fungizide Mischung, enthaltend

a) einen Oximether der Formel I,

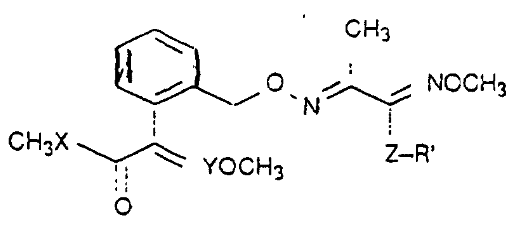

(I)

in der die Substituenten die folgende Bedeutung haben:

X Sauerstoff oder Amino (NH) ;
Y CH oder N;
Z Sauerstoff, Schwefel, Amino (NH) oder $C_1$-$C_4$-Alkylamino (N-$C_1$-$C_4$-Alkyl) ;
R' $C_1$-$C_6$-Alkyl, $C_1$-$C_6$-Halogenalkyl, $C_3$-$C_6$-Alkenyl, $C_2$-$C_6$-Halogenalkenyl, $C_3$-$C_6$-Alkinyl, $C_3$-$C_6$-Halogenalkinyl, $C_3$-$C_6$-Cycloalkyl-methyl, oder Benzyl, welches partiell oder vollständig halogeniert sein kann und/oder einen bis drei der folgenden Reste tragen kann: Cyano, $C_1$-$C_4$-Alkyl, $C_1$-$C_4$-Halogenalkyl, $C_1$-$C_4$-Alkoxy, $C_1$-$C_4$-Halogenalkoxy und $C_1$-$C_4$-Alkylthio und/oder

b) ein Carbamat der Formel I,

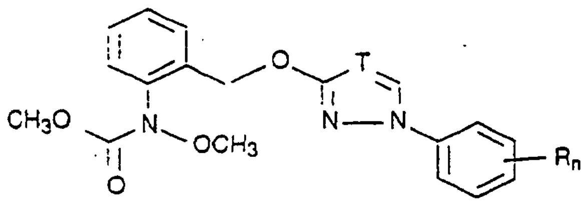

(II)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht,
und
c) ein Pyrimidinderivat der Formel III,

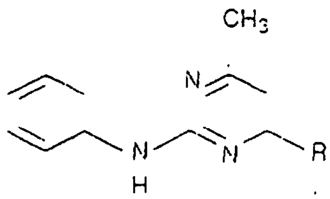

(III)

in der R fur Methyl, Propin-1-yl oder Cyclopropyl steht,
in einer synergistisch wirksamen Menge.

2. Fungizide Mischung nach Anspruch 1, **dadurch gekennteichnet, daß** das Gewichtsverhältnis der Verbindung I und/oder II zu der Verbindung III 20:1 bis 0, 1:2 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I und/oder einer Verbindung der Formel II gemäß Anspruch 1 und einer Verbindung der Formel III gemäß Anspruch 1 in einer synergistisch wirksamen Menge behandelt.

4. Verfahren nach Anspruch 3, **dadurch gekennzeichnet, daß** man eine Verbindung I und/oder eine Verbindung II und eine Verbindung III gleichzeitig gemeinsam oder getrennt oder nacheinander ausbringt.

5. Verfahren nach Anspruch 3, **dadurch gekennzeichnet, daß** man die Schadpilze, deren Lebensraum oder die von ihnen freizuhaltenden Pflanzen, Samen, Böden, Flächen, Materialien oder Räume mit 0,01 bis 0,5 kg/ha einer Verbindung I und/oder eine Verbindung der Formel II gemäß Anspruch 1 behandelt.

6. Verfahren nach Anspruch 3, **dadurch gekennzeichnet, daß** man die Schadpilze, deren Lebensraum oder die von ihnen freizuhaltenden Pflanzen, Samen, Böden, Flächen, Materialien oder Räume mit 0,1 bis 1,0 kg/ha einer Verbindung III gemäß Anspruch 1 behandelt.

**Claims**

1. A fungicidal mixture comprising

a) an oxime ether of the formula I

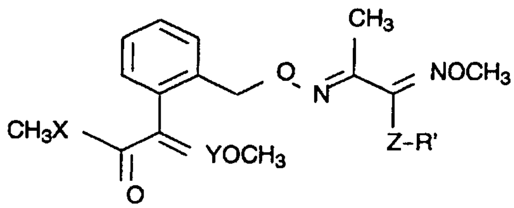

(I)

where the substituents have the following meanings:

- X is oxygen or amino (NH);
- Y is CH or N;
- Z is oxygen, sulfur, amino (NH) or $C_1$-$C_4$-alkylamino (N-$C_1$-$C_4$-alkyl);
- R' is $C_1$-$C_6$-alkyl, $C_1$-$C_6$-haloalkyl, $C_3$-$C_6$-alkenyl, $C_2$-$C_6$-haloalkenyl, $C_3$-$C_6$-alkynyl, $C_3$-$C_6$-haloalkynyl, $C_3$-$C_6$-cycloalkylmethyl, or is benzyl which can be partially or fully halogenated and/or can have attached to it one to three of the following radicals: cyano, $C_1$-$C_4$-alkyl, $C_1$-$C_4$-haloalkyl, $C_1$-$C_4$-alkoxy, $C_1$-$C_4$-haloalkoxy and $C_1$-$C_4$-alkylthio and/or

b) a carbamate of the formula II

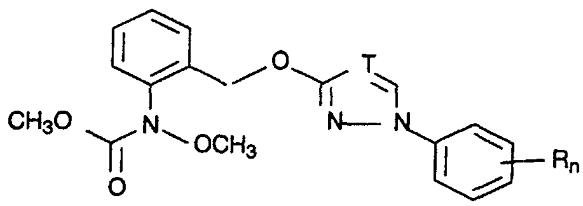

(II)

where T is CH or N, n is 0, 1 or 2 and R is halogen, $C_1$-$C_4$-alkyl or $C_1$-$C_4$-haloalkyl, it being possible for the radicals R to be different when n is 2,
and
c) a pyrimidine derivative of the formula III

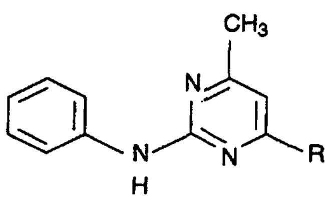

III

where R is methyl, propyn-1-yl or cyclopropyl,
in a synergistically active amount.

**2.** A fungicidal mixture as claimed in claim 1 wherein the weight ratio of the compound I and/or II to the compound III is 20:1 to 0.1:2.

**3.** A method of controlling harmful fungi, which comprises treating the harmful fungi, their environment, or the plants, seeds, soils, areas, materials or spaces to be kept free from them with a compound of the formula I and/or a compound of the formula II as set forth in claim 1 and a compound of the formula III as set forth in claim 1 in a synergistically active amount.

4. A method as claimed in claim 3, wherein a compound I and/or a compound II and a compound III are applied simultaneously together or separately or in succession.

5. A method as claimed in claim 3, wherein the harmful fungi, their environment, or the plants, seeds, soils, areas, materials or spaces to be kept free from them are treated with from 0.01 to 0.5 kg/ha of a compound I and/or a compound of the formula II as set forth in claim 1.

6. A method as claimed in claim 3, wherein the harmful fungi, their environment, or the plants, seeds, soils, areas, materials or spaces to be kept free from them are treated with from 0.1 to 1.0 kg/ha of a compound III as set forth in claim 1.

**Revendications**

1. Mélange fongicide contenant

a) un éther d'oxime de formule I

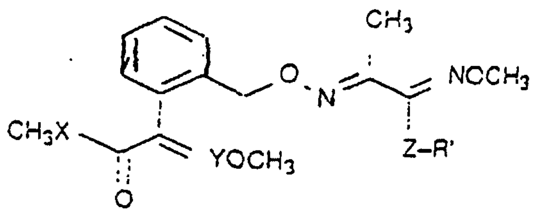

(I)

dans laquelle les symboles ont les significations suivantes :

X : l'oxygène ou un groupe amino (NH) ;

Y : CH ou N ;

Z : l'oxygène, le soufre, un groupe amino (NH) ou alkylamino en C1-C4 (N-alkyle en C1-C4) ;

R' : un groupe alkyle en C1-C6, halogénoalkyle en C1-C6, alcényle en C3-C6, halogénoalcényle en C2-C6, alcynyle en C3-C6, halogénoalcynyle en C3-C6, (cycloalkyle en C3-C6)-méthyle ou benzyle, lequel peut être halogéné en totalité ou en partie et/ou peut porter un à trois des substituants suivants : cyano, alkyle en C1-C4, halogénoalkyle en C1-C4, alcoxy en C1-C4, halogénoalcoxy en C1-C4 et alkylthio en C1-C4, et/ou

b) un carbamate de formule I

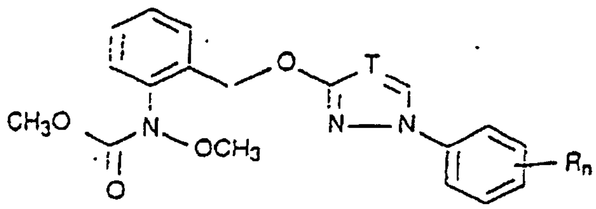

(II)

dans laquelle T représente CH ou N, n est égal à 0, 1 ou 2 et R représente un halogène, un groupe alkyle en C1-C4 ou halogénoalkyle en C1-C4, les divers substituants R pouvant être différents lorsque n est égal à 2, et

c) un dérivé de la pyrimidine répondant à la formule III

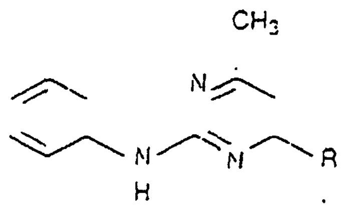 (III)

dans laquelle R représente un groupe méthyle, propyn-1-yle ou cyclopropyle,
en quantité synergétique efficace.

2. Mélange fongicide selon la revendication 1, **caractérisé par le fait que** les proportions relatives en poids entre le composé I et/ou II et le composé III vont de 20 : 1 à 0,1 : 2.

3. Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes nuisibles par un composé de formule I et/ou un composé de formule II selon la revendication 1 et un composé de formule III selon la revendication 1 en quantité synergétique efficace.

4. Procédé selon la revendication 3, **caractérisé par le fait que** l'on applique en même temps, simultanément ou séparément, ou successivement, un composé I et/ou un composé II et un composé III.

5. Procédé selon la revendication 3, **caractérisé par le fait que** l'on traite les mycètes nuisibles, leur habitat ou les végétaux, semences, sols, aires, matériaux ou locaux qu'on veut protéger contre les mycètes nuisibles par 0,01 à 0,5 kg/ha d'un composé I et/ou d'un composé de formule II selon la revendication 1.

6. Procédé selon la revendication 3, **caractérisé par le fait que** l'on traite les mycètes nuisibles, leur habitat ou les végétaux, semences, sols, aires, matériaux ou locaux qu'on veut protéger contre les mycètes nuisibles par 0,1 à 1,0 kg/ha d'un composé III selon la revendication 1